# EUROPEAN PATENT APPLICATION

(11) **EP 0 672 633 A1**
(43) Date of publication of application: **20.09.1995**
(21) Application number: 94927781.8
(22) Date of filing: 28.09.1994
(51) Int. Cl.: C03C 14/00, C03C 10/00, C04B 33/36, C04B 35/00, C04B 35/58

(54) **BODY CONTAINING DEPOSITED CORUNDUM AND PROCESS FOR PRODUCING THE BODY**

(30) Priority: 01.10.1993 JP 247016/93
(71) Applicant: TOTO LTD., Kitakyushu-shi Fukuoka 802 (JP)
(72) Inventor: MATSUMOTO, Akio, Kitakyushu-shi, Fukuoka-ken 802 (JP); NISHIKAWA, Toshiya, Kitakyushu-shi, Fukuoka-ken 802 (JP)
(74) Representative: Geering, Keith Edwin
(86) International application number: JP9401586
(87) International publication number: WO9509820

(57) **Abstract**

A body composed of a glass phase and a crystal phase dispersed in that phase and containing corundum crystals deposited from the glass phase as the main ingredient of the crystal phase; and a process for producing the body by forming a powdery raw material of a body, firing the formed material to glassify the whole or part of the material, and depositing corundum crystals from the glass. The invention can provide a material containing alumina homogeneously dispersed in the glass phase at a low cost and permits applications to tableware, sanitary earthenware, insulator, construction material, machine parts, ceramic board, etc.

## Description

### TECHNICAL FIELD OF THE INVENTION

The present invention relates to a body comprising corundum phase crystallized from a glass phase and a method for preparing the body.

### BACKGROUND

Body used for preparing the so-called ceramic wares such as tablewares and sanitary-wares is produced by the following manner. That is, particles constituting a raw basis material are melted into a glass phase during firing and the glass phase is fluidized at a high temperature to thus fill up the gaps formed between the unmelted particles. Therefore, the body has a structure which comprises a glass phase and a crystalline phase dispersed in the glass phase.

Whether a particular particle can be melted or not is dependent upon the melting point thereof which is influenced by the crystalline structure of the particle, combinations of the particular particle with other particles (a specific crystal which has a high melting point in itself may be melted at a temperature lower than the melting point thereof if other crystals coexist) and the firing temperature and schedule. In case of conventional ceramic whitewares, raw materials capable of being melted during the vitrification phenomenon are, for instance, feldspars serving as fluxes and clays capable of imparting plasticity during molding, while raw materials which are not melted during the vitrification phenomenon are, for instance, quartz. However, quartz is not completely unmelted. More specifically, a part thereof is melted into the glass phase while the remaining part thereof holds its crystalline form. In addition, mullite is crystallized from the glass phase.

The reason why quartz has been used as a crystalline phase-forming substance in the conventional ceramic whitewares as described above is that it is cheaper than other sources for the crystalline phase and that it is a naturally occurring raw material which coexists with glass phase-forming minerals. For instance, feldspars and clays rarely independently occur naturally and in most cases, they occur in the form of admixtures with quartz.

For this reason, minerals conventionally used as the crystalline phase-forming raw materials for ceramic whitewares are limited to quartz (or cristobalite which is a crystal formed through transformation of quartz). As has been discussed above, however, a part of quartz is melted into the glass phase. Thus, various problems arise. For instance, it is very difficult to control the particle size of the quartz present in the resulting fired body, there is observed a great difference between the thermal expansion coefficients of quartz and the glass phase (among various kinds of crystals, quartz is assigned to a group comprising crystals having very high thermal expansion coefficients) and quartz has poor mechanical strength.

Recently, there has been developed an alumina-reinforced ceramic whitewares in which a part (or the whole) of quartz is replaced with alumina for eliminating the foregoing problems and the application thereof to tablewares and insulators has been advanced.

The alumina-reinforced ceramic whitewares are prepared by adding alumina crystals (α -alumina, also called corundum) to the raw basis material, or aluminum hydroxide is optionally added. The addition of aluminum hydroxide to the raw basis material is, in principle, identical to the addition of corundum thereto since aluminum hydroxide is converted into corundum during firing.

However, the alumina-reinforced ceramic whitewares suffer from the following two problems:
The first problem relates to the cost of raw materials. More specifically, the price of alumina is substantially higher than the prices of the conventional raw materials for ceramic whitewares which mainly comprise naturally occurring raw materials.

The second problem relates to the dispersibility of alumina particles in the body. In such an alumina-reinforced ceramic whitewares, alumina particles having high toughness are dispersed in a fragile glass phase and therefore, the alumina particles must be fine as much as practicable and uniformly dispersed in the glass phase in order to ensure an increase in the strength of the alumina-reinforced ceramic whitewares. However, the dispersibility of alumina particles in the body is lowered as the particle size thereof is reduced and the particles are accordingly present in the body in the agglomerated conditions. For this reason, it is in general believed that the average particle size of alumina particles dispersed in the a lumina-reinforced ceramic whitewares suitably ranges from 2 to 10 µm and that if alumina particles having a particle size of less than the lower limit are used, the strength of the resulting ceramic whitewares is conversely reduced due to the agglomeration thereof. In addition, most of the commercially available powdery alumina products comprise huge secondary particles formed from a large number of α -crystals and correspondingly, must be pulverized into particles having a desired particle size. In this case, if the powdery alumina is collectively pulverized together with other raw materials, alumina particles are not sufficiently pulverized because of the hardness thereof higher than those for the other raw materials. After all, alumina should separately be pulverized and this makes the production processes complicated. Moreover, when the alumina separately pulverized is mixed with other raw materials, a problem concerning the dispersibility of the alumina arises, in particular, in cases where alumina used has a small particle size.

Products whose body has a structure comprising a glass phase and alumina phase dispersed in the glass phase include ceramics substrates in addition to the foregoing alumina-reinforced ceramic whitewares.

Substrates used for, for instance, semiconductor integrated circuits include those produced from various materials, but most preferred are ceramic substrates from the viewpoint of physical properties such as strength, heat resistance, resistance to chemicals and coefficient of thermal conductivity.

Among ceramic substrates, most commonly used are alumina substrates, but the alumina substrate requires a firing temperature on the order of about 1600 °C. Therefore, the conductive materials used for green sheet-printing are limited to those having high electrical resistances such as tungsten and molybdenum and the cost required for the firing thereof is also high. For this reason, there have recently been intensively conducted various studies to reduce the production cost of substrates through the development of materials therefor capable of being sintered at a lower temperature and to thus make it possible to use conductive materials having lower electrical resistances such as gold, silver and copper.

The most promising material for substrates capable of being sintered at such a low temperature is one comprising alumina particles dispersed in glass phase (boro-silicate glass in many cases) which has not only a sintering temperature lower than that of alumina, but also a coefficient of thermal expansion quite similar to that of silicon.

The method for preparing such an alumina-dispersed glass substance comprises the steps of mixing glass particles and alumina particles, then molding the resulting mixture and firing the molded mixture. When this method is compared with the method for the preparation of alumina-reinforced ceramic whitewares, they differ from one another only in that the former does not use particles which can be vitrified through firing, but uses particles (frits) which are uniformly vitrified in advance and accordingly, they are, in principle, identical to one another.

Therefore, the application of this production method suffers from the same problems observed on the alumina-reinforced ceramic whitewares, i.e., problems concerning the production cost and the dispersibility of alumina particles in the boby. Moreover, the method requires the use of expensive glass frits and accordingly, the problem of the cost becomes more and more serious.

### SUMMARY OF THE INVENTION

An object of the present invention is to solve the foregoing problems associated with the conventional methods and more specifically to provide a cheap body in which alumina particles are uniformly dispersed in a glass phase as well as a method for preparing the body.

According to the present invention, there is provided a body which comprises a glass phase and a crystalline phase dispersed in the glass phase and wherein the crystalline phase comprises corundum crystallized from the glass phase as a principal component.

Such a body can be prepared by a method comprises the steps of molding a powdery raw basis material and vitrifying a part or the whole of the molded body by firing the body to thus separate corundum crystals from the glass phase. Such a body can be used for producing tablewares, sanitary-wares, insulators, construction materials, machine parts and ceramic substrates.

The present invention will be described in more detail below.

### DESCRIPTION OF THE PREFERRED EMBODIMENTS

When producing a body wherein alumina particles are uniformly dispersed in a glass (phase) as has been discussed above, the uniform dispersion of alumina particles in the glass phase is not expected by simply adding alumina particles as a raw material to other ingredients for the body. The inventors of this invention have now discovered a method for uniformly dispersing alumina particles in a glass phase by crystallizing corundum from the glass phase.

It has been known that the composition of the usual raw material for ceramic whitewares falls within the primary phase area of mullite and that those of particular porcelain fall within the primary phase area of cordierite, forsterite and steatite.

On the other hand, in the body of the present invention, the composition of the portion of the raw materials which can be vitrified must fall within the primary phase area of corundum or (a part of) the glass phase must be in the primary phase area of corundum at least during the recrystallization thereof from the glass phase or during the vitrification process thereof. Moreover, raw materials having such compositions must be available at a low price and the body must be produced at a low cost.

Preferred raw basis materials which satisfy the foregoing restriction requirements are materials whose portion to be vitrified comprises, as principal components, 15 to 65% by weight of SiO₂ , 25 to 85% by weight of Al₂O₃ and 1 to 25% by weight of K₂O+Na₂O+CaO+MgO.

The term "portion to be vitrified" herein used means the portion of the body which can be vitrified at the firing temperature of the body. Therefore, the ignition loss (Ig-loss) and the moiety having high refractoriness which is free of vitrification at the firing temperature are not taken into consideration in the foregoing calculation. Examples of the moiety having high refractoriness which is free of vitrification at the firing temperature include alumina (corundum). In other words, the present invention is characterized in that corundum crystals are separated from the glass phase, but it is also possible to increase the content of the corundum in the glass phase by previously adding corundum particles to the raw material as an ingredient in addition to the foregoing corundum crystallized from the glass phase. In this case, however, the corundum particles added to the raw material in advance are preferably those comprising coarser particles as compared with the corundum crystallized from the glass phase. The moiety having high refractoriness which is free of vitrification at the firing temperature include, for instance, a part of quartz (quartz partially undergoes vitrification depending on the firing temperature) and zircon, in addition to corundum. When a cheap naturally occurring raw material is used, quartz inevitably coexists as an impurity. In this respect, the quartz adversely affects the physical properties of the resulting body as an impurity, but can sometimes serve to improve the thermal shock resistance through the formation of microcracks at the boundary between the quartz and the glass phase. In addition, if it is used for the production of insulator, zircon may be added as a raw material for the improvement in electrical properties.

Although there has already been discussed above about the crystallization of corundum from a glass phase, the glass phase formed through the vitrification referred to herein does not necessarily mean the condition whose atomic structure is microscopically completely converted into amorphous state. The glass phase herein means the condition which mainly comprises a fused portion and in which a crystalline portion thereof still remains, but is difficult to detect the crystalline portion through the X-ray diffraction technique because of very low stability of the crystalline portion. Thus, the term "crystallization of corundum from the glass phase" does not necessarily mean only the direct crystallization of corundum crystals from the uniform glass melt, but the corundum crystals may likewise be crystallized from the glass melt through unstable (undetectable in most cases) intermediate products. For instance, β - alumina crystals may be crystallized from the glass phase including Na₂O, but the crystals are unstable. Therefore, the β -alumina crystals are assumed to be converted into α -alumina (corundum) upon being withdrawn from a furnace at least in the industrial production process. The term "crystallization of corundum from the glass phase" of course includes these cases as well.

Incidentally, the glass phase is not necessarily converted into a uniform complete liquid phase in the present invention, as has been described above and this is quite important in the present invention from the economical standpoint. This is because, the use of a high firing temperature and a high energy cost are required for converting the glass phase into a uniform complete liquid phase. For this reason, the temperature for firing the molded body preferably used in the present invention is lower than that of the liquid surface of the glass phase. The difference between these temperatures may vary depending on the composition of the glass phase and the desired amount of corundum to be separated therefrom, but the difference in general ranges from 50 to 800°C

The advantages achieved by the use of such a low firing temperature will be more apparent through the comparison of the process with the process for producing glass-ceramics. The glass-ceramics can be prepared according to the following two methods. One method comprises converting a raw basis material into a complete amorphous state through a heat-treatment, then pulverizing it to give frits and molding the resulting frits and the other method comprises converting a raw basis material into a complete amorphous state through a heat-treatment and then molding it. In any case, the molded products are subjected to a secondary heat-treatment to thus separate crystals from the molded product. In these methods, the temperature of the first heat-treatment is of course higher than that of the liquid surface of the raw composition and the heat-treatment must be performed at a temperature substantially higher than that of the liquid surface of the raw composition in an industrial operation in order to obtain a uniform glass melt.

The method of the present invention permits the crystallization of crystals at a substantially low temperature through only one step for heat-treatment unlike such methods for preparing glass-ceramics, but at least two steps for heat-treatment may be used in the method of the present invention and this allows an increase in the amount of crystals separated from the raw material to some extent or a reduction of the heat-treating temperature.

The portion of the raw basis material used in the invention which is vitrified preferably comprises, as principal components, 15 to 65% by weight of SiO₂ , 25 to 85% by weight of Al₂O₃ and 1 to 25% by weight of K₂O+Na₂O+CaO+MgO as has been described above. As seen from the phase diagram, the composition falls within the region which permits the crystallization of corundum as much as possible and the firing temperature is not so high. In this respect, the amount of corundum is preferably not less than 5% by weight and more preferably not less than 10% by weight but not more than 65% by weight on the basis of the total weight of the body, for the improvement in physical properties of the resulting body. In addition, the firing temperature is preferably not more than 1600°C and more preferably not more than 1500 °C. If the amount of SiO₂ is less than the lower limit of the preferred range, the firing requires the use of a substantially high temperature, while if it exceeds the upper limit, the amount of corundum crystallized is substantially reduced. In addition, the amount of Al₂O₃ is less than the lower limit of the preferred range, the amount of corundum crystallized is substantially reduced, while if it exceeds the upper limit, the firing requires the use of a substantially high temperature. Moreover, if the amount of K₂O+Na₂O+CaO+MgO is less than the lower limit, the firing requires the use of a substantially high temperature, while if it exceeds the upper limit, it is difficult to carry out the crystallization of corundum.

Then preferred raw materials for the body used in the present invention will hereunder be detailed while taking into consideration the relation between the amount of corundum crystallized and the firing temperature, the cost required for the raw materials and the easy availability thereof.

It is important in the present invention to use cheap raw materials and this can be accomplished through the use of naturally occurring raw materials as at least the principal components of the portion to be vitrified. The naturally occurring raw materials are in general cheap, but suffer from a problem that they have high contents of impurities. In the present invention, however, the presence of impurities may be advantageous in that the raw material can easily be vitrified (in other words, the firing temperature may be lowered).

When selecting the raw basis material which serves to determine the composition of the portion thereof to be vitrified, it should be given the first priority in consideration that a single mineral should be selected as the principal component of the portion to be vitrified in such a manner that it occupies the major part of the portion or that a combination of a plurality of minerals should be selected. However, both have merits and demerits. The former has a merit such that a uniform glass phase can easily be obtained since the principal components are derived from a single mineral, but has a demerit such that the freedom of the formula is low due to the particular chemical composition of the mineral selected. On the other hand, the latter has a merit such that the freedom of formula is high since various formulations can be obtained by appropriately selecting combinations and compounding ratio of a plurality of minerals and a demerit such that it is difficult to form a uniform glass phase. In the latter, the most effective means for eliminating the demerit is to select a combination of raw minerals whose refractoriness are not substantially different from one another.

When selecting naturally occurring raw materials as the raw basis materials used in the invention from the foregoing standpoint, sericite is a preferred raw material used in the case wherein a single mineral is selected as the principal components of the portion to be vitrified such that it occupies the major part of the portion. Among clayey mica, sericite is suitably used in this case since it has a relatively high content of K₂O and those having relatively high purity are easily available. Sericite is a naturally occurring raw material and therefore, it is difficult to obtain those having purity equal to approximately 100%, but any problem does not arise even if they may comprise, more or less, kaolin mineral, quartz and clayey mica other than sericite. In particular, the kaolin mineral may sometimes increase the amount of corundum separated and accordingly, it may sometimes be added intentionally to sericite.

The term "kaolin mineral" herein used means clay minerals represented by the following empirical formula: Al₂O₃ ·2SiO₂· nH₂O such as kaolinite, halloysite, metahalloysite and dickite.

On the other hand, when a combination of a plurality of minerals is selected as the naturally occurring raw materials, such combinations preferably used in the present invention include those comprising kaolin mineral and minerals containing not less than 5% by weight of K₂O+Na₂O+CaO+MgO. The combination has an advantage in that the kaolin mineral can impart plasticity to the resulting body during molding. Preferred examples of minerals containing not less than 5% by weight of K₂O+Na₂O+CaO+MgO include feldspars such as potash feldspar, soda feldspar, lime feldspar, nepheline syenite, Cornish stone and pumice and particularly preferred are feldspars containing not less than 10% by weight of K₂O+Na₂O, having high purity and an alkali content as high as possible. Minerals abundant in nature and having the highest alkali content are nephelines, with nepheline syenite rich in nepheline being particularly preferred. It is not common, but there have been known naturally occurring amorphous glass substances having higher alkali contents and they may likewise be used in the invention.

The reason why the minerals having high contents of K₂O+Na₂O are particularly preferred as the minerals containing K₂O+Na₂O+CaO+MgO which are used in combination with kaolin minerals is, as will be apparent from the comparison of the phase diagrams of the three-component systems: SiO₂-Al₂O₃-K₂O or Na₂O or CaO or MgO, that the primary phase area of corundum in the K₂O, Na₂O phase diagram extends over the area wherein the Al₂O₃ content is low as compared with the CaO, MgO phase diagram. Therefore, it would be expected that a relatively large amount of corundum can crystallize from the glass phase even when the portion of the raw basis material has a low content of Al₂O₃ (this means that the firing temperature can be reduced).

However, these minerals cannot always be used in a large amount when they are used in the preparation of electronic materials such as ceramic substrates since alkali metals such as K₂O, Na₂O spoil electrical properties. In such cases, it is necessary to use raw materials containing alkaline earth metals such as CaO, MgO. As has been discussed above, however, the primary phase area of corundum does not extend over the area, wherein the Al₂O₃ content is low, in the phase diagrams of the three-component systems: SiO₂-Al₂O₃-CaO or MgO. Therefore, a raw material having a high content of Al₂O₃ (i.e., having a low SiO₂ content) should be used in combination with the kaolin mineral in order to crystallize a large amount of corundum. Such a raw material is not usually present in nature, but those comprising calcined materials as principal components are available at a low price.

The term "calcined materials" herein used means artificial materials prepared by mixing raw materials comprising CaO and/or MgO as principal components with raw materials having high Al₂O₃ contents and then calcining the resulting mixture and examples thereof available at a relatively low price include alumina cement. In this respect, most of such calcined materials are hydraulic materials and accordingly, it should be noted that these materials show only a short pot life when water is used during molding. In other words, when the calcined materials are used, the processing thereof must not include any step for controlling the particle size through mixing them with other raw materials and water and subsequent pulverization, but the foregoing uncalcined mixture is calcined (the product obtained in this calcination is often called "clinker") and then subjected to dry pulverization to give such calcined materials. Thus, it is sufficient to control the particle size of the calcined material during the dry pulverization. Moreover, the kaolin mineral is in general prepared from clays and if clays are mixed with such calcined materials in the presence of a large amount of water, the resulting mixture often undergoes agglomeration. In such case, therefore, the mixture is molded according to a method which requires the use of only a small amount of water or the molding process requires the use of a large amount of a dispersant for the clays.

Among the preferred raw materials for the body of the present invention listed above, those comprising K₂O+Na₂O+CaO+MgO as principal components include, for instance, sericite, feldspars and alumina cement. However, they all comprise K₂O+Na₂O+CaO+MgO as principal components, but the content thereof is not more than 50% by weight in these cases. In the present invention, minerals having a high content of K₂O+Na₂O+CaO+MgO (for instance, 100% by weight) is not preferred for use as main sources of K₂O+Na₂O+CaO+MgO, but may be used as auxiliary agents for sintering in order to make up for the deficiency of the alkali components present in the main sources of K₂O+Na₂O+CaO+MgO (such as sericite, feldspars and alumina cement).

This is because, if such an auxiliary agent is used as a main source of K₂O+Na₂O+CaO+MgO, minerals having high Al₂O₃ contents must inevitably be used as other raw materials and this results in an increase in the firing temperature. As an exceptional case, if the SiO₂ content of the portion of the raw material to be vitrified is markedly reduced to thus increase the amount of corundum crystallized from the material as much as possible (in this case, the use of a high firing temperature is required), the auxiliary agent may be used as a main source of K₂O+Na₂O+CaO+MgO. Examples of such minerals used as preferred auxiliary agents are dolomite, magnesite, calcium carbonate, lime, gypsum, potassium carbonate and talc.

Such an auxiliary agent for firing is mainly used for reducing the firing temperature of the resulting raw basis material and thus those containing flux components other than K₂O, Na₂O, CaO, MgO may be used as the auxiliary agents of this type. Examples of such auxiliary agents containing flux components preferably used herein are minerals containing Li₂O such as petalite; minerals containing BaO such as barium carbonate; minerals containing SrO such as strontium carbonate; and minerals containing B₂O₃ such as borax.

Moreover, the raw material for the body of the present invention may further comprise a nucleating agent for crystallizing corundum therefrom, but the nucleating agent is not an essential component unlike the preparation of glass-ceramics and the use thereof shows only an effect of increasing the amount of corundum crystallized and of reducing the crystallization temperature to some extent depending on the formulation of the raw material. Examples of such nucleating agents are those known in the preparation of glass-ceramics such as TiO₂, ZrO₂, Fe₂O₃, V₂O₅, NiO, Cr₂O₃, fluorides, sulfides, metal phosphates and noble metals. Other nucleating agents usable in the present invention include, for instance, those comprising Al₂O₃ as a main component such as alumina sol, aluminum lactate, aluminum phosphate, γ -alumina and ultra-fine α -alumina.

In the present invention, the glass phase need not completely and uniformly converted into an amorphous state as has already been described above and accordingly, the firing temperature is substantially lower than that required for the method of preparation of the usual glass substances. On the other hand, it is difficult to provide a process for pulling out a pin under a high temperature condition unlike the glass-production process. For this reason, foaming is caused depending on the formulation of the raw material when firing is performed at a temperature suitable for the crystallization of corundum in a sufficient amount and thus this results in the production of a porous body. The foaming is usually undesirable except for the intentional production of porous materials. The problem of such foaming phenomenon may be eliminated by calcining, in advance, raw materials which are apt to cause foaming. Among the raw basis materials described above, naturally occurring raw materials, in particular, feldspars are generally apt to easily cause foaming.

The principal raw materials used in the body of the present invention have been discussed above in detail. Then specific methods for preparing the same will now be described below.

With regard to the control of the particle size of the raw basis materials, if the particle sizes of purchased raw materials each falls within the corresponding desired range, these raw materials may simply be admixed together. If not so, all of the raw materials are pulverized in one lot or separately. The average particle size of each raw materials is preferably not more than 30 µ and more preferably not more than 10 µ . With regard to the crystallization of corundum, the smaller the particle size of the raw materials, the greater the amount of corundum crystallized therefrom and the lower the firing temperature. Therefore, the particle size thereof is preferably as small as possible, but the cost required for the pulverization increases or if the particle size is extremely small, the mixture of these raw materials cannot easily be molded depending on the molding methods (for instance, it is difficult to reduce the average particle size to not more than 0.3 µm when slip-casting a large-sized article).

Moreover, the raw materials can be molded by a known molding method selected depending on the shape of the article to be molded such as slip casting, tape casting, jiggering, dry pressing, plastic pressing, semi-wet pressing, extrusion molding and electrophoretic casting. When the body of the present invention is applied to the preparation of existing products, any particular molding method is not necessary and the molding methods peculiar thereto can, in principle, be adopted (for instance, the slip casting technique for sanitary-wares and the tape casting technique for ceramic substrates). In addition, some molding methods require the addition, to the raw materials, of auxiliary materials such as dispersants (e.g., water or an organic solvent), deflocculating agents, flocculants, binders, plasticizers, demoulding agents, lubricants, drying-promotors.

Then the firing process is, in principle, performed in an oxidizing atmosphere, but may be carried out in a neutral or reducing atmosphere when using a glaze capable of developing a color in a reducing atmosphere or when using naturally occurring raw materials which are apt to cause foaming. The firing temperature required for crystallizing a certain amount of corundum when the firing is carried out in a neutral or reducing atmosphere is sometimes lower than that required for crystallizing the same amount of corundum in an oxidizing atmosphere, depending on the compositions of the raw materials used. This tendency is particularly conspicuous in cases wherein mullite is first crystallized from a glass phase, then the mullite is melted into the glass phase and simultaneously corundum is crystallized therefrom.

In such cases, the firing method is selected while comparing the cost required for the use of a high firing temperature with that required for the selection of a particular atmosphere. The firing temperature varies depending on the compounding ratios of the raw materials, but is preferably not more than 1600 °C and more preferably not more than 1500 °C . The amount of crystallized corundum has a tendency of increase if the heat curve is controlled so as to extend the soaking time at the highest temperature and to extend the time required for dropping the temperature from the highest temperature to a temperature 100 to 300°C lower than the highest temperature or the time required for raising the temperature from a temperature 100 to 300°C lower than the highest temperature to the highest temperature. Moreover, if the raw materials include a mineral which undergoes a volume change along with the phase transition, the heat curve must gradually be changed near the transition temperature (in particular, during dropping the temperature).

### Examples

### (Example 1)

To 100 parts by weight of pottery stone having the composition shown in the following Table 1 and comprising sericite as a principal component, there were added 38 parts by weight of water as a dispersant and 0.06 part by weight of water glass as a deflocculating agent, followed by pulverization in a pot mill to give a slurry in which the average particle size of the dispersed particles was controlled to 2.4 µm.

**Table 1**

| Composition of Pottery Stone (wt%) | | | | | | | | |
|---|---|---|---|---|---|---|---|---|
| SiO₂ | Al₂O₃ | TiO₂ | Fe₂O₃ | CaO | MgO | K₂O | Na₂O | Ig. Loss |
| 46.6 | 37.8 | 0.7 | 0.3 | 0.3 | 0.2 | 8.2 | 1.1 | 4.8 |

A molded body was prepared from the resulting slurry through the slip casting technique while using a gypsum mold. The molded body was fired in an oxidizing or N₂ gas atmosphere according to the following heat curve (heating schedule): 250 °C/hr between room temperature and 1000 °C; 25°C/hr between 1000°C and the highest temperature; soaking at the highest temperature for 3 hours; 25°C/hr between the highest temperature and 1000°C; and standing to natural cool between 1000 °C and room temperature, while changing the highest temperature from 1250 °C to 1400°C at intervals of 50 °C. The crystals present in each resulting fired body was quantitatively and qualitatively analyzed through the X-ray diffraction technique. The results thus obtained are summarized in the following Table 2. Any crystal other than those listed in Table 2 was not detected at all. Moreover, the corundum crystals were examined under an electron microscope and as a result, it was found that the corundum crystals were completely uniformly dispersed in the glass phase and had a hexagonal plate-like crystalline form having a diameter ranging from 1 to 3 µm and a thickness ranging from about 0.1 to 0.3 µm.

**Table 2**

| Amount of Crystals Separated from Glass Phase (wt%) | | | | |
|---|---|---|---|---|
| Highest Temp. (°C) | Oxidizing Atmosphere | | N₂ Atmosphere | |
| | Corundum | Mullite | Corundum | Mullite |
| 1250 | 5.6 | 23.4 | 11.8 | 15.5 |
| 1300 | 17.6 | 12.6 | 22.3 | 3.2 |
| 1350 | 24.6 | -- | 26.1 | -- |
| 1400 | 28.5 | -- | | |

### (Example 2)

To a mixture of 67 parts by weight of nepheline syenite and 33 parts by weight of clay comprising kaolinite as a principal component, which had the compositions listed in the following Table 3, there were added 46 parts by weight of water as a dispersing medium and 0.11 part by weight of water glass as a deflocculating agent, followed by pulverization in a pot mill to give a slurry in which the average particle size of the dispersed particles was controlled to 5.3 µm.

**Table 3**

| Compositions of Raw Materials (wt%) | | | | | | | | | |
|---|---|---|---|---|---|---|---|---|---|
| | SiO₂ | Al₂O₃ | TiO₂ | Fe₂O₃ | CaO | MgO | K₂O | Na₂O | Ig. Loss |
| Clay | 44.3 | 40.0 | 1.7 | 0.3 | 0.1 | 0.0 | 0.0 | 0.0 | 13.6 |
| Nepheline Syenite | 56.1 | 25.0 | 0.2 | 0.1 | 1.2 | 0.0 | 9.0 | 7.4 | 1.0 |

A molded body was prepared from the slurry through the pressure slip casting technique while using a resin mold. The molded body was fired in an oxidizing atmosphere according to the following heat curve: 250°C/hr between room temperature and 950°C; 25°C/hr between 950 °C and the highest temperature; soaking at the highest temperature for 3 hours; 25°C/hr between the highest temperature and 950 °C; and standing to natural cool between 950°C and room temperature, while changing the highest temperature from 1150 °C to 1300°C at intervals of 50 °C . The crystals present in each resulting fired body was quantitatively and qualitatively analyzed through the X-ray diffraction technique. The results thus obtained are summarized in the following Table 4. Any crystal other than those listed in Table 4 was not detected at all. Moreover, the corundum crystals were examined under an electron microscope and as a result, it was found that the corundum crystals were completely and uniformly dispersed in the glass phase and had a hexagonal plate-like crystalline form having a diameter ranging from 0.5 to 2 µm and a thickness ranging from about 0.1 to 0.3 µm.

**Table 4**

| Highest Temp. (°C) | Amount of Crystals Separated from Glass Phase (wt%) | |
|---|---|---|
| | Corundum | Mullite |
| 1150 | -- | 4.6 |
| 1200 | 5.4 | 3.5 |
| 1250 | 8.7 | -- |
| 1300 | 10.2 | -- |

### (Example 3)

In this Example, there were used 94 parts by weight of pottery stone comprising sericite as a principal component, 2 parts by weight of clay comprising kaolinite as a principal component and 4 parts by weight of dolomite, which had compositions listed in the following Table 5. The pottery stone was pulverized to an average particle size of 4.5 µm, the dolomite was pulverized to an average particle size of 2.5 µm and then they were mixed with the clay followed by addition of 35 parts by weight of water as a dispersing medium, 0.08 part by weight of water glass as a deflocculating agent and 0.03 part by weight of sodium carbonate to the mixture to give a slurry.

**Table 5**

| Compositions of Raw Materials (wt%) | | | | | | | | | |
|---|---|---|---|---|---|---|---|---|---|
| | SiO₂ | Al₂O₃ | TiO₂ | Fe₂O₃ | CaO | MgO | K₂O | Na₂O | Ig. Loss |
| Pottery Stone | 47.6 | 37.3 | 0.7 | 0.3 | 0.3 | 0.2 | 8.4 | 0.6 | 4.6 |
| Clay | 44.3 | 40.0 | 1.7 | 0.3 | 0.1 | 0.0 | 0.0 | 0.0 | 13.6 |
| Dolomite | 0.6 | 0.0 | 0.0 | 0.1 | 33.5 | 18.9 | 0.0 | 0.0 | 46.9 |

A molded body was prepared from the slurry through the slip casting technique while using a gypsum mold. The molded body was fired in an oxidizing atmosphere according to the following heat curve: 200 °C/hr between room temperature and 1000 °C; 25°C/hr between 1000°C and 1100°C ; 15°C/hr between 1100°C and 1150 °C ; soaking at 1150 °C for one hour; 15°C/hr between 1150°C and 1050 °C; 30°C/hr between 1050°C and 900°C ; and standing to natural cool between 900°C and room temperature. The amount of corundum present in the resulting fired body was determined by the X-ray diffraction technique and found to be 24.5% by weight.

### (Example 4)

To a mixture comprising 99 parts by weight of pottery stone comprising sericite as a principal component and which had a composition listed in the following Table 6 and one part by weight of titanium oxide , there were added 47 parts by weight of water as a dispersing medium, 2 parts by weight of ammonium polyacrylate as a deflocculating agent, 8 parts by weight of polyethylene glycol #2000 and 3 parts by weight of butylbenzyl phthalate as a plasticizer, followed by pulverization, in a pot mill, of the resulting mixture to an average particle size of 1.1 µm and then addition of 10 parts by weight of an emulsion of an acrylic resin as a binder to give a slurry.

**Table 6**

| Composition of Pottery Stone (wt%) | | | | | | | | |
|---|---|---|---|---|---|---|---|---|
| SiO₂ | Al₂O₃ | TiO₂ | Fe₂O₃ | CaO | MgO | K₂O | Na₂O | Ig. Loss |
| 46.0 | 38.1 | 0.4 | 0.2 | 0.2 | 0.1 | 9.2 | 1.1 | 4.7 |

A molded body having a thickness of about 200 µm was prepared from the resulting slurry through the tape casting technique. The molded body was fired in an N₂ gas atmosphere according to the following heat curve: 250 °C/hr between room temperature and 1000 °C; 20°C/hr between 1000°C and 1200 °C ; soaking at 1200 °C for 2 hours; 20°C/hr between 1200°C and 1000 °C; 250 °C/hr between 1000°C and room temperature. The amount of corundum present in the resulting fired body was determined by the X-ray diffraction technique and found to be 24.9% by weight.

### (Example 5)

There were mixed, under a dry condition, 55 parts by weight of alumina cement and 44.5 parts by weight of clay comprising kaolinite as a principal component, which had compositions listed in the following Table 7 as well as 0.5 part by weight of γ -alumina to give a powdery raw material having an average particle size of 6.9 µm. Then a molded body was prepared from the resulting powdery raw material through the dry pressure molding technique.

**Table 7**

| Compositions of Raw Materials (wt%) | | | | | | | | | |
|---|---|---|---|---|---|---|---|---|---|
| | SiO₂ | Al₂O₃ | TiO₂ | Fe₂O₃ | CaO | MgO | K₂O | Na₂O | Ig. Loss |
| Alumina Cement | 0.5 | 78.5 | 0.1 | 0.3 | 20.5 | 0.1 | 0.0 | 0.0 | 0.0 |
| Clay | 44.3 | 40.0 | 1.7 | 0.3 | 0.1 | 0.0 | 0.0 | 0.0 | 13.6 |

The molded body was fired in an oxidizing atmosphere according to the following heat curve: 250 °C/hr between room temperature and 1250 °C; 30°C/hr between 1250°C and 1400 °C; soaking at 1400 °C for 4 hours; 20°C/hr between 1400°C and 1300 °C; 40°C/hr between 1300°C and 1000 °C ; and standing to natural cool between 1000 °C and room temperature. The amount of corundum present in the resulting fired body was determined by the X-ray diffraction technique and found to be 36.8% by weight. Moreover, a test piece of 40 mm× 4 mm× 3 mm was cut out of the fired body and subjected to a three-point bending test at a span of 30 mm and the bending strength thereof was found to be 205 MPa.

### INDUSTRIAL APPLICABILITY

As has been explained above in detail, it is clear that, the body and the method for preparing the same according to the present invention can provide a material, in which alumina particles (crystals) are uniformly dispersed in a glass phase, at a low price and the material can be used for the production of various articles such as tablewares, insulators, construction materials, machine parts and ceramic substrates.

## Claims

1. A body comprising a glass phase and a crystalline phase dispersed in the glass phase; the crystalline phase comprising, as a principal component, corundum crystallized from the glass phase.

2. A method for preparing a body which comprises a glass phase and a crystalline phase dispersed in the glass phase and which comprises corundum crystals as a principal component of the crystalline phase, comprising the steps of molding a powdery raw basis material and vitrifying a part or the whole of the molded body by firing the body to thus crystallize corundum crystals from the glass phase.

3. The method of claim 2 wherein the vitrified portion of the raw basis material comprises, as principal components, 15 to 65% by weight of SiO₂, 25 to 85% by weight of Al₂O₃ and 1 to 25% by weight of K₂O+Na₂O+CaO+MgO.

4. The method of claim 2 wherein at least the vitrified portion of the raw basis material comprises, as principal components, naturally occurring raw materials.

5. The method of claim 4 wherein the naturally occurring raw material comprises sericite as a principal mineral component.

6. The method of claim 4 wherein the naturally occurring raw material comprises, as principal mineral components, kaolin mineral and a mineral which comprises not less than 5% by weight of K₂O+Na₂O+CaO+MgO.

7. The method of claim 2 wherein the raw basis material comprises, as principal components, clay comprising kaolin mineral as a main mineral component and a calcined material comprising CaO and/or MgO as main components.

8. The method of claim 7 wherein the calcined material comprising CaO and/or MgO as main components is alumina cement.

9. The method of claim 2 wherein the raw basis material comprises a nucleating agent for crystallizing the corundum.

10. The method of claim 2 wherein the temperature for firing the molded body is lower than the temperature of the surface of the liquid phase formed from the portion of the raw basis material to be vitrified.
